# EUROPEAN PATENT SPECIFICATION

(11) **EP 2 267 335 B1**
(45) Date of publication and mention of the grant of the patent: **17.10.2012**
(21) Application number: 10165777.3
(22) Date of filing: 14.06.2010
(51) Int. Cl.: F16H 7/08

(54) **Chain tensioner**
Kettenspanner
Tendeur de chaîne

(30) Priority: 15.06.2009 JP 2009142295
(43) Date of publication of application: 29.12.2010
(73) Proprietor: NTN Corporation, Osaka-shi, Osaka (JP)
(72) Inventor: Onimaru, Kouichi c/o NTN Corporation, Shizuoka (JP); Sato, Seiji c/o NTN Corporation, Shizuoka (JP); Kitano, Satoshi c/o NTN Corporation, Shizuoka (JP)
(74) Representative: Grünecker, Kinkeldey, Stockmair & Schwanhäusser

(56) References cited:
- EP-A2- 0 916 869
- WO-A1-2007/122013
- JP-A- 2008 281 171
- US-A- 5 931 754
- US-A1- 2007 054 767

## Description

### BACKGROUND OF THE INVENTION

This invention relates to chain tensioner used to maintain the tension of a timing chain for driving a camshaft or camshafts of an automotive engine.

Some automotive engines include a timing chain through which the rotation of the crankshaft is transmitted to a camshaft or camshafts, thereby opening and closing valves of combustion chambers as the camshafts rotate. In order to keep the tension of the timing chain within an optimum range, a tension adjusting device is often used which includes a chain guide pivotable about a pivot shaft, and a chain tensioner for pressing the chain through the chain guide.

JP Patent Publication 2008-281171A discloses a chain tensioner of this type, which includes a cylindrical cylinder having an open end and a closed end, a plunger axially slidably inserted in the cylinder, and a return spring biasing the plunger in a direction to protrude from the cylinder. The plunger is a cylindrical member having a bottom and an open end located in the cylinder. An oil supply passage is formed in the cylinder through which hydraulic oil is introduced into a pressure chamber defined by the plunger and the cylinder. A check valve is provided at the oil outlet of the oil supply passage that allows only a flow of hydraulic oil from the oil supply passage into the pressure chamber. A leakage gap is defined between the sliding surfaces of the plunger and the cylinder through which hydraulic oil in the pressure chamber can leak out.

With this chain tensioner, when the tension of the timing chain increases while the engine is running, the plunger is pushed into the cylinder under the tension of the chain, thereby preventing over-tensioning of the chain. At this time, the hydraulic oil in the pressure chamber leaks through the leakage gap defined between the sliding surfaces of the plunger and the cylinder, thereby producing damper force. The plunger thus moves slowly due to the damper force.

When the tension of the timing chain decreases while the engine is running, the plunger protrudes from the cylinder under the biasing force of the return spring, thereby removing slackness of the chain. At this time, the check valve opens, and hydraulic oil flows into the pressure chamber from the oil supply passage, so that the plunger moves rapidly.

With this chain tensioner, air may be mixed into hydraulic oil supplied into the pressure chamber from an oil pump when the engine is started. In this case, when the tension of the chain increases, the plunger moves a larger distance because the air mixed in the pressure chamber is compressed, thus reducing the damper force of the chain tensioner.

In order to prevent reduction in damper force, the above chain tensioner has a threaded hole formed in the cylinder to extend from its outer periphery to inner periphery and includes a screw threaded into the threaded hole to define a helical air vent passage between the thread faces of the screw and the threaded hole so that air in the pressure chamber can be discharged to the outer air through the air vent passage.

Since air mixed into the pressure chamber collects at the upper portion of the pressure chamber, it is necessary to provide the air vent passage over the pressure chamber. This chain tensioner is mounted such that the cylinder is inclined with its open end located lower than its closed end.

In mounting this chain tensioner to an engine cover, the cylinder is inserted into a tensioner mounting hole formed in the engine cover, and a flange formed on the outer periphery of the cylinder is fixed to the outer surface of the engine cover by a plurality of bolts.

It is troublesome to prepare the plurality of bolts to mount the chain tensioner to the engine cover, and it is equally troublesome to tighten the individual bolts too.

The inventors of the present invention have developed a chain tensioner which can be more easily mounted to an engine cover, which includes an external thread formed on the outer periphery of the cylinder. By bringing this external thread into threaded engagement with an internal thread formed on the inner periphery of the tensioner mounting hole, this tensioner can be mounted to the engine cover.

Since the external thread for mounting to the engine cover is directly formed on the outer periphery of the cylinder of this chain tensioner, no bolts are necessary to mount this chain tensioner to the engine cover. Thus, this tensioner can be easily mounted to the engine cover.

But because this tensioner is mounted to the engine cover by threading the cylinder into the tensioner mounting hole, any angular portion of the cylinder may be located at the highest level when the tensioner is mounted in position. Thus, there is the possibility that the air vent passage may not be located over the pressure chamber when the tensioner is mounted in position. If the air vent passage is not located over the pressure chamber, it is impossible to discharge air in the pressure chamber, which leads to reduction in damper force.

The document US 5 931 754 A discloses a chain tensioner comprising the features of the preamble of claim 1.

An object of the present invention is to provide a chain tensioner of which the damper force is less likely to decrease due to air mixed therein even if the tensioner is structured such that any angular portion of the cylinder could be located at the highest level when the tensioner is mounted in position.

### SUMMARY OF THE INVENTION

In order to achieve this object, the present invention provides a chain tensioner comprising the features of claim 1.

With this arrangement, since hydraulic oil in the pressure chamber leaks out from the closed end of the cylinder through the leakage gap, when the chain tensioner is used such that the cylinder is inclined with its open end located lower than its closed end, air in the pressure chamber is discharged rapidly. Thus, even if the tensioner is structured such that any angular portion of the cylinder could be located at the highest level when the tensioner is mounted in position, the damper force is less likely to decrease due to air mixed in the tensioner.

The end portion of the sleeve near the closed end of the cylinder may be press-fitted in a sleeve engaging recess formed in the closed end of the cylinder. With this arrangement, since the sleeve engaging recess keeps the sleeve radially in position, it is possible to improve the dimensional accuracy of the leakage gap defined between the sliding surfaces of the plunger and the sleeve.

With the arrangement in which the return spring has one end thereof supported by the sleeve, and the sleeve is pressed against the closed end of the cylinder under the biasing force of the return spring, the sleeve is prevented from moving axially in the cylinder by the biasing force of the return spring.

The concept of this invention is applicable to a chain tensioner wherein an external thread is formed on the outer periphery of the cylinder that is threadedly engaged with an internal thread formed on the inner periphery of a tensioner mounting hole of an engine cover. With this chain tensioner, since the cylinder is threaded into the tensioner mounting hole, any angular portion of the cylinder could be at the highest level when the tensioner has been mounted in position. But according to the present invention, since air mixed in the pressure chamber is discharged through the leakage gap, it is not necessary to provide a separate air vent passage other than the leakage gap.

A reservoir chamber may be formed in the sleeve having a larger diameter than the valve hole of the check valve. With this arrangement, it is hydraulic oil remaining in the reservoir chamber is supplied into the pressure chamber immediately after the engine has been started. Thus, the damper force is less likely to decrease even if air is mixed in hydraulic oil supplied from the oil pump.

The outer periphery of the sleeve may comprise a large-diameter portion defining the leakage gap in cooperation with the plunger, and a small-diameter portion connected to the end of the large-diameter portion near the closed end of the cylinder through a shoulder. With this arrangement, irrespective of the stroke position of the plunger, the length of the leakage gap between the sliding surfaces of the plunger and the sleeve remains constant, which stabilizes the damper force.

Alternatively, the inner periphery of the plunger may comprise a small-diameter portion defining the leakage gap in cooperation with the sleeve, and a large-diameter portion connected to the end of the small-diameter portion near the open end of the cylinder through a shoulder. With this arrangement too, irrespective of the stroke position of the plunger, the length of the leakage gap between the sliding surfaces of the plunger and the sleeve remains constant, which stabilizes the damper force.

The gap defined between sliding surfaces of the plunger and the cylinder is preferably larger in size than the leakage gap. With this arrangement, the flow resistance of hydraulic oil that flows through the gap between the sliding surfaces of the plunger and the cylinder scarcely influences the damper force. Thus, it is possible to control the damper force with high precision by adjusting the dimension of the leakage gap.

The sleeve is preferably made of a material having the same linear expansion coefficient as the material forming the plunger. With this arrangement, since no substantial difference in thermal expansion appears between the plunger and the sleeve, it is possible to prevent change in the size of the leakage gap even when the engine temperature rises. This stabilizes the damper force.

The cylinder is preferably made of a material having a larger linear expansion coefficient than the material forming the plunger. With this arrangement, even when the engine temperature rises, the gap between the sliding surfaces of the plunger and the cylinder never decreases in size due to the difference in thermal expansion coefficient between the plunger and the cylinder, which makes it possible to control the damper force with high precision.

The portion of the outer periphery of the sleeve that is brought into sliding contact with the plunger may have a surface roughness Ra of 0.8 or less. A helical groove may be formed in a portion of the outer periphery of the sleeve that is brought into sliding contact with the plunger. With this arrangement, by changing the depth and/or lead angle of the helical groove, it is possible to adjust the damper force.

An assist spring may be mounted between the closed end of the cylinder and the end of the plunger located in the cylinder to assist the return spring, thereby increasing the biasing force tending to protrude the plunger.

The chain tensioner may further comprise a register ring received in a ring receiving groove formed in the inner periphery of the cylinder near the open end thereof and elastically bound around the outer periphery of the plunger, wherein a plurality of circumferential grooves are formed in the outer periphery of the plunger so as to be axially spaced from each other, wherein the register ring is engageable in any of the circumferential grooves, and wherein each of the circumferential grooves comprises a tapered surface along which the register ring can slide while radially expanding when a load is applied that tends to protrude the plunger from the cylinder, thereby allowing the plunger to protrude from the cylinder, and a stopper surface that engages the register ring when a load is applied that tends to push the plunger into the cylinder, thereby restricting retraction of the plunger into the cylinder.

With the chain tensioner according to this invention, since air mixed into the pressure chamber is discharged through the leakage gap, even if the tensioner is structured such that any angular portion of the cylinder could be located at the highest level when the tensioner has been mounted in position. Thus, the damper force is less likely to decrease due to air mixed in the tensioner.

### BRIEF DESCRIPTION OF THE DRAWINGS

Fig. 1 is a front view of a chain transmission assembly including a chain tensioner embodying the present invention;
Fig. 2 is an enlarged sectional view of the chain tensioner of Fig. 1;
Fig. 3 shows a modification in which a sleeve engaging recess in the closed end of the cylinder is omitted, and the end of the sleeve near the closed end of the cylinder is in abutment with the closed end of the cylinder;
Fig. 4 shows a modification in which a reservoir chamber is formed in the sleeve shown in Fig. 2;
Fig. 5 shows a modification in which the outer periphery of the sleeve shown in Fig. 2 comprises a large-diameter portion and a small-diameter portion;
Fig. 6 shows a modification in which a reservoir chamber is formed in the sleeve shown in Fig. 5.
Fig. 7 shows a modification in which the inner periphery of the plunger shown in Fig. 2 comprises a small-diameter portion and a large-diameter portion;
Fig. 8 shows a modification in which an assist spring is mounted in the chain tensioner shown in Fig. 7;
Fig. 9 shows a modification in which a helical groove is formed in the outer periphery of the sleeve shown in Fig. 4;
Fig. 10 is an enlarged view of the sleeve shown in Fig. 9;
Fig. 11 shows a modification in which the sleeve shown in Fig. 2 is omitted, and the pressure chamber is defined by the cylinder and the plunger;
Fig. 12 shows a modification in which a flange formed on the outer periphery of the cylinder shown in Fig. 2 is fixed to the outer surface of an engine cover by a plurality of bolts;
Fig. 13 shows a comparative example in which the sleeve of Fig. 12 is omitted, thereby defining the pressure chamber by the cylinder and the plunger, and a screw is threaded into a threaded hole extending form the inner periphery to outer periphery of the cylinder, thereby defining a helical air vent passage between thread faces of the screw and the threaded shaft so that air in the pressure chamber is discharged to the outer air through this air vent passage;
Fig. 14 shows a modification in which mounting pieces formed at upper and lower portions of the cylinder shown in Fig. 2 are fixed to a side of an engine block; and
Fig. 15 shows a comparative example in which the sleeve of Fig. 14 is omitted, thereby defining the pressure chamber by the cylinder and the plunger, and a screw is threaded into a threaded hole extending form the inner periphery to outer periphery of the cylinder, thereby defining a helical air vent passage between thread faces of the screw and the threaded shaft so that air in the pressure chamber is discharged to the outer air through this air vent passage.

### DETAILED DESCRIPTION OF THE PREFERRED EMBODIMENTS

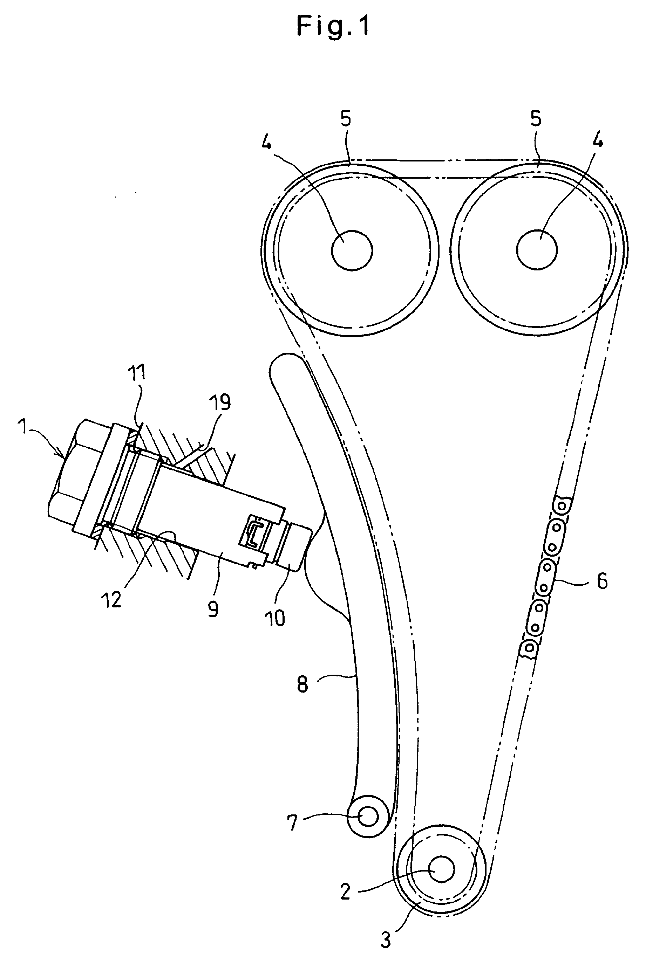

Fig. 1 shows a chain transmission assembly including the chain tensioner 1 embodying the present invention. The chain transmission assembly includes a sprocket 3 fixed to an engine crankshaft 2, sprockets 5 fixed to respective camshafts 4, and a chain 6 trained around the sprockets 3 and 5 so as to transmit the rotation of the crankshaft 2 to the camshafts 4, thereby opening and closing valves (not shown) of the combustion chambers (not shown either) as the camshafts 4 rotate.

A chain guide 8 is pivotally supported on a pivot shaft 7 and is kept in contact with the chain 6. The chain tensioner 1 presses the chain 6 through the chain guide 8.

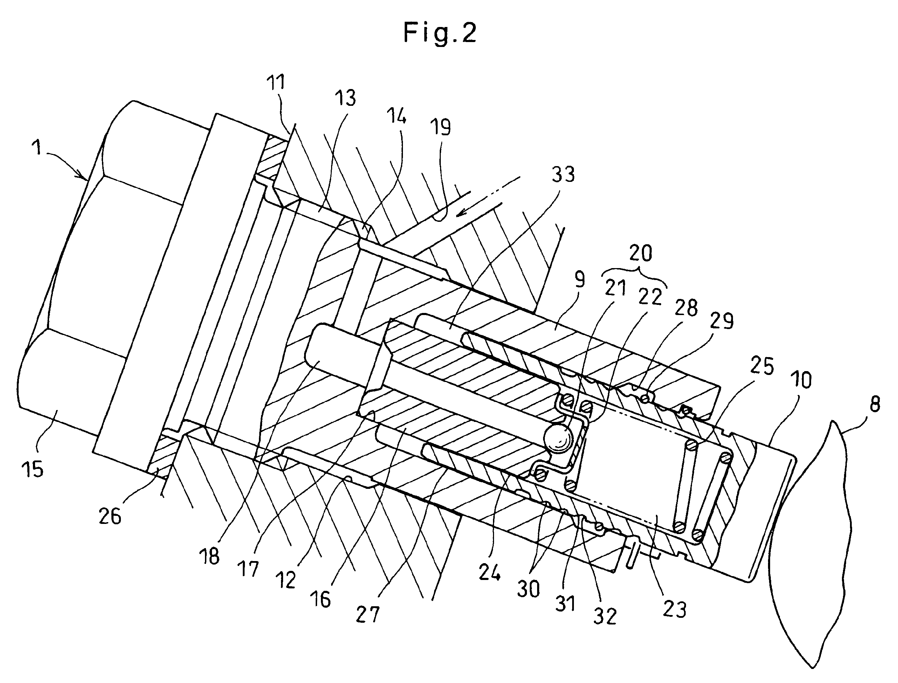

As shown in Fig. 2, the chain tensioner 1 includes a cylindrical cylinder having open and closed ends, and a plunger 10 axially slidably inserted in the cylinder 9. The cylinder 9 is inserted in a tensioner mounting hole 12 formed in an engine cover 11 with its open end disposed in the interior of the engine cover 11. In this assembled state, the cylinder 9 is inclined such that its open end is located lower than its closed end.

An external thread 13 is formed on the outer periphery of the cylinder 9. The external thread 13 is in threaded engagement with an internal thread 14 formed on the inner periphery of the tensioner mounting hole 12, thus fixing the cylinder 9 to the engine cover 11. A spanner engaging hexagonal head 15 is provided at the closed end of the cylinder 9. By engaging a spanner (not shown) on the hexagonal head 15, the external thread 13 can be tightened.

The plunger 10 is a cylindrical member with a bottom and having an open end inserted in the cylinder 9. A sleeve 16 which is open at both ends is received in the cylinder 9 so as to be coaxial with the cylinder 9. The sleeve 16 has one end portion thereof press-fitted in a sleeve engaging recess 17 formed in the closed end of the cylinder 9. The portion of the plunger 10 inserted in the cylinder 9 is axially slidably fitted on the outer periphery of the sleeve 16.

An oil supply passage 18 is formed in the cylinder 9 for introducing hydraulic oil from outside the cylinder 9 into the cylinder 9. The oil inlet of the oil supply passage 18 is located on the portion of the outer periphery of the cylinder 9 disposed in the tensioner mounting hole 12 so that hydraulic oil supplied from an oil pump (not shown) through an oil hole 19 formed in the engine cover 11 is introduced into the cylinder 9 through the oil supply passage 18. The oil outlet of the oil supply passage 18 is located on the inner surface of the sleeve engaging recess 17 and communicates with the end of the sleeve 16 facing the closed end of the cylinder 9. The end of the sleeve 16 facing the closed end of the cylinder 9 has a larger diameter than the oil outlet of the oil supply passage 18.

At the end of the sleeve 16 near the open end of the cylinder 9, a check valve 20 is provided which permits only a flow of hydraulic oil from inside to outside of the cylinder 9. The check valve 20 comprises a spherical valve body 21 for opening and closing the open end of the sleeve 16 near the open end of the cylinder 9, and a retainer 22 for restricting the movement of the spherical valve body 21. Thus, the open end of the sleeve 16 near the open end of the cylinder 9 serves as a valve hole of the check valve 20.

A pressure chamber 23 is defined in the plunger 10 into which hydraulic oil is introduced through the check valve 20. The pressure chamber 23 is a space defined by the plunger 10 and the sleeve 16, and its volume changes as the plunger 10 moves. An annular leakage gap 24 is defined between sliding surfaces of the plunger 10 and the sleeve 16. Through the leakage gap 24, hydraulic oil in the pressure chamber 23 is configured to leak out.

A return spring 25 is mounted in the pressure chamber 23. The return spring 25 has one end thereof supported by the end of the sleeve 16 near the open end of the cylinder 9 through the retainer 22 of the check valve 20, and biases the plunger 10 in the direction to protrude from the cylinder 9 at its other end. The plunger 10 presses the chain guide 8 at its end protruding from the cylinder 9.

A gasket 26 is sandwiched between the hexagonal head 15 of the cylinder 9 and the engine cover 11. The gasket 26 provides a seal between the hexagonal head 15 and the engine cover 11, thereby preventing hydraulic oil from leaking out through a gap between cylinder 9 and the tensioner mounting hole 12.

The gap 27 between the sliding surfaces of the plunger 10 and the cylinder 9 is larger than the leakage gap 24, which is defined between the plunger 10 and the sleeve 16.

The sleeve 16 is made of a material having substantially the same linear expansion coefficient as the material forming the plunger 10. As used herein, "substantially the same" is not limited to "strictly identical" but covers a difference in linear expansion coefficient up to 1.0 x 10⁻⁶ at normal temperature. By way of example, if the plunger 10 is made of free cutting steel (SUM), the sleeve 16 may be made of chrome steel (SCr) or chrome molybdenum steel (SCM).

The portion of the outer periphery of the sleeve 16 that is in contact with the plunger 10 has a surface roughness Ra of 0.8 or less. The cylinder 9 is made of a material having a larger linear expansion coefficient than the material forming the plunger 10. Thus if the plunger 10 is made of iron, the cylinder 9 may be made of aluminum.

A circumferentially extending ring receiving groove 28 is formed in the inner periphery of the cylinder 9, in which a register ring 29 is axially movably received. The register ring 29 is a ring member of which a circumferential portion is missing so as to be radially elastically deformable. The register ring 29 is elastically bound around the outer periphery of the plunger 10 and is engageable in any of a plurality of circumferential grooves 30 formed in the outer periphery of the plunger 10 so as to be axially spaced from each other.

Each circumferential groove 30 comprises a tapered surface 31 along which the register ring 29 can slide while radially expanding, thereby allowing the plunger 10 to protrude from the cylinder 9, and a stopper surface 32 configured to engage the register ring 29 when a load is applied to the plunger 10 that tends to push the plunger 10 into the cylinder 9, thereby preventing the plunger 10 form being further pushed into the cylinder 9.

Now the operation of this chain tensioner 1 is described.

When the tension of the chain 6 increases while the engine is running, the plunger 10 is pushed into the cylinder under the tension of the chain 6, thereby absorbing the tension of the chain 6. At this time, damper force is produced by the viscous resistance of hydraulic oil that leaks out from the pressure chamber 23 through the leakage gap 24. The damper force allows the plunger 10 to move slowly. The damper force can be controlled by adjusting the size of the leakage gap 24.

When the tension of the chain 6 decreases while the engine is running, the plunger 10 protrudes from the cylinder under the biasing force of the return spring 25, thereby removing slackness of the chain 6. At this time, the check valve 20 opens, and hydraulic oil flows into the pressure chamber 23 from the oil supply passage 18 through the sleeve 16. Thus, the plunger 10 protrudes quickly.

When the plunger 10 moves back and forth due to vibrations of the chain 6, the register ring 29 also moves back and forth in the ring receiving groove 28. When the chain 6 slackens markedly and the plunger 10 tends to protrude by a distance larger than the distance by which the register ring 29 can move in the ring receiving groove 28, the register ring 29 slides along the tapered surface 31 of one of the circumferential grooves 30 while radially expanding and engages into the immediately rear circumferential groove 30, thereby allowing the plunger 10 to protrude.

The tension of the chain 6 may remain high when the engine is stopped according to the stopped positions of the camshafts 4. In this case, due to engagement of the register ring 29 and the circumferential groove 30 in which the ring 29 is fitted, the plunger 10 cannot be pushed in. This prevents slackening of the chain 6 when the engine is started again, thus allowing smooth start of the engine.

When the engine is stopped, the oil pump stops, so that the level of the hydraulic oil in the pressure chamber 23 falls. Thus, when the engine is restarted, air may mix into hydraulic oil supplied into the pressure chamber 23 through the oil supply passage 18. But such air collects at the top portion of the pressure chamber 23 and is discharged from the pressure chamber 23 through the leakage gap 24. Air discharged from the pressure chamber 23 flows into an air space 33 defined nearer to the closed end of the cylinder 9 than is the plunger 10, and then gradually flows out of the cylinder 9 through the gap 27 between the plunger 10 and the cylinder 9.

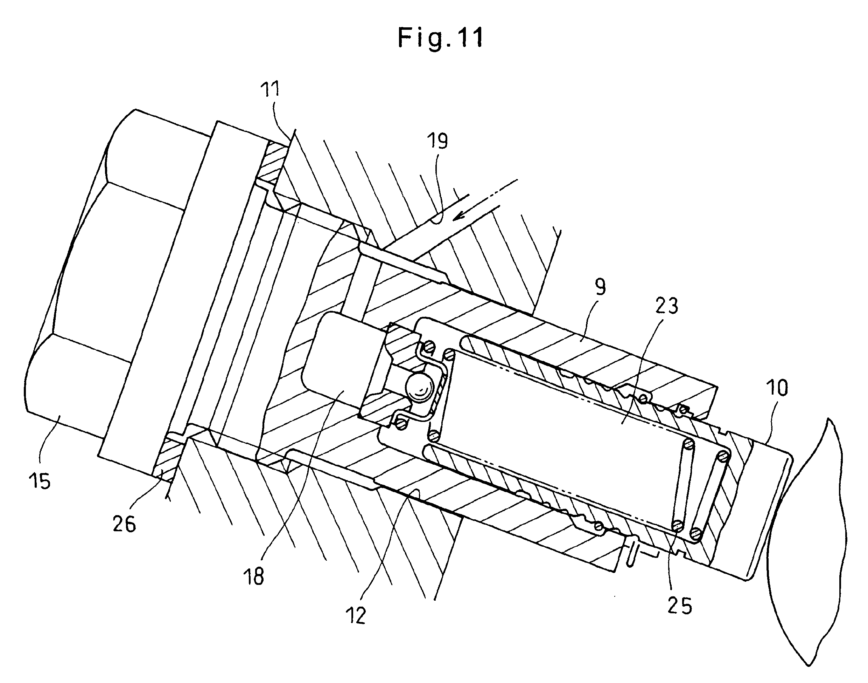

As shown in Fig. 11, if the pressure chamber 23 were defined between the cylinder 9 and the plunger 10 while omitting the sleeve 16, once air mixes into the pressure chamber 23, the air will remain at the upper portion of the pressure chamber 23 without being discharged, so that the air in the pressure chamber 23 reduces the damper force.

In contract, with the chain tensioner 1 according to this invention, since hydraulic oil in the pressure chamber 23 flows out from the closed end of the cylinder 9 through the leakage gap 24, when the chain tensioner 1 is used with the open end of the cylinder 9 facing obliquely downwardly, air in the pressure chamber 23 is quickly discharged through the leakage gap 24. Thus, even if air mixes into the pressure chamber 23, the chain tensioner 1 can quickly regain sufficient damper force, so that the damper force is less likely to decrease.

With this chain tensioner 1, since the external thread 13 for mounting the chain tensioner 1 to the engine cover 11 is directly formed on the outer periphery of the cylinder 9, no bolts are necessary to mount the chain tensioner. Thus, this chain tensioner can be more easily mounted to the engine cover 11.

Since this chain tensioner 1 is mounted in position by threading the cylinder 9 into the tensioner mounting hole 12, any angular portion of the cylinder 9 may be located at the highest level when the tensioner is mounted in position. But irrespective of the angular position of the cylinder 9 when the tensioner is mounted in position, air in the pressure chamber 23 can be reliably discharged through the leakage gap 24. Thus, no air vent passage is necessary other than the leakage gap 24.

With this chain tensioner 1, since the gap 27 between the sliding surfaces of the plunger 10 and the cylinder 9 is larger in size than the leakage gap 24, the flow resistance of hydraulic oil that flows through the gap 27 between the sliding surfaces of the plunger 10 and the cylinder 9 scarcely influences the damper force. Thus, it is possible to control the damper force with high precision by adjusting the dimension of the leakage gap 24.

With this chain tensioner 1, since the sleeve 16 is made of a material having the same linear expansion coefficient as the material forming the plunger 10, it is possible to prevent change in the size of the leakage gap 24 even when the engine temperature changes. This allows the chain tensioner to produce stable damper force.

With this chain tensioner 1, since the cylinder 9 is made of a material having a higher expansion coefficient than the material forming the plunger 10, even when the engine temperature rises, the gap 27 between the sliding surfaces of the plunger 10 and the cylinder 9 never decreases in size due to the difference in thermal expansion coefficient between the plunger 10 and the cylinder 9, which makes it possible to control the damper force with high precision.

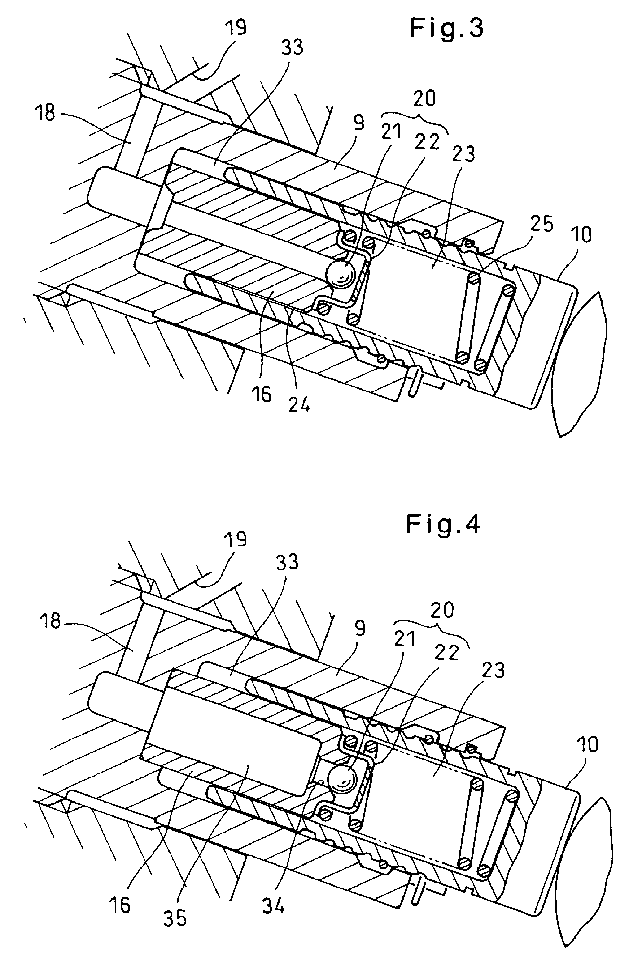

As shown in Fig. 3, even if the sleeve engaging recess 17 at the closed end of the cylinder 9 is omitted, and the end of the sleeve 16 near the closed end of the cylinder 9 is kept in abutment with the closed end of the cylinder 9, it is possible to prevent axial movement of the sleeve 16 in the cylinder under the biasing force of the return spring 25. But as is apparent from the above embodiment, by forming the sleeve engaging recess 17 in the closed end of the cylinder 9 and press-fitting the end of the sleeve 16 near the closed end of the cylinder 9 into the sleeve engaging recess 17, the sleeve 16 is radially fixed in position by the sleeve engaging recess 17, so that it is possible to improve the dimensional accuracy of the leakage gap 24 defined between the sliding surfaces of the plunger 10 and the sleeve 16.

As shown in Fig. 4, a cylindrical reservoir chamber 35 may be formed in the sleeve 16 having a larger diameter than the valve hole 34 of the check valve 20. With this arrangement, hydraulic oil that remains in the reservoir chamber 35 is introduced into the pressure chamber 23 immediately after the engine has been started. Thus, even if air is mixed into hydraulic oil supplied from the oil pump, the damper force is less likely to decrease.

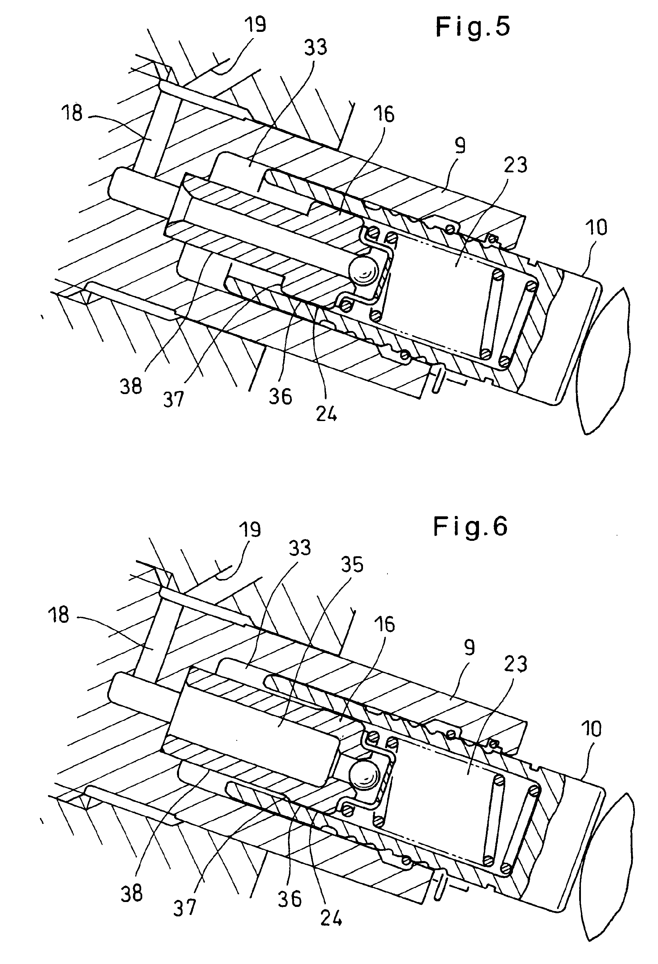

As shown in Figs. 5 and 6, the outer periphery of the sleeve 16 may comprise a large-diameter portion 36 which defines the leakage gap 24 in cooperation with the plunger 10, and a small-diameter portion 38 connected to the end of the large-diameter portion 36 near the closed end of the cylinder 9 through a shoulder 37. With this arrangement, irrespective of the stroke position of the plunger 10, the length of the leakage gap 24 between the sliding surfaces of the plunger 10 and the sleeve 16 remains constant, so that the tensioner can stably produce damper force.

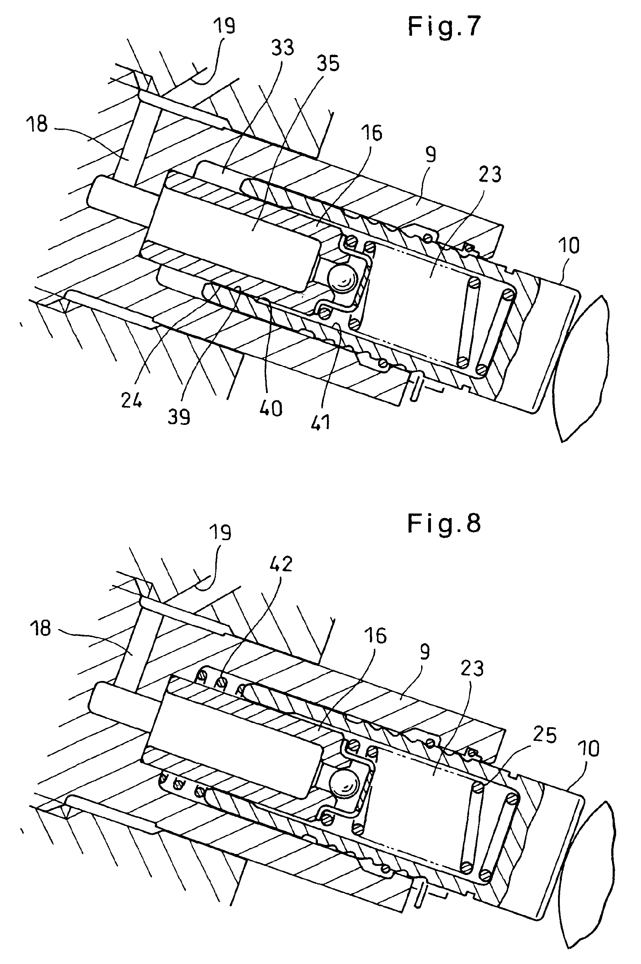

Alternatively, as shown in Fig. 7, the inner periphery of the plunger 10 may comprise a small-diameter portion 39 defining the leakage gap 24 in cooperation with the sleeve 16, and a large-diameter portion 41 connected to the end of the small-diameter portion 38 near the open end of the cylinder 9 through a shoulder 40. With this arrangement too, irrespective of the stroke position of the plunger 10, the length of the leakage gap 24 between the sliding surfaces of the plunger 10 and the sleeve 16 remains constant, so that the tensioner can stably produce damper force.

As shown in Fig. 8, an assist spring 42 may be mounted between the closed end of the cylinder 9 and the end of the plunger 10 inserted in the cylinder 9 to assist the return spring 25. With this arrangement, it is possible to increase the biasing force that tends to protrude the plunger 10.

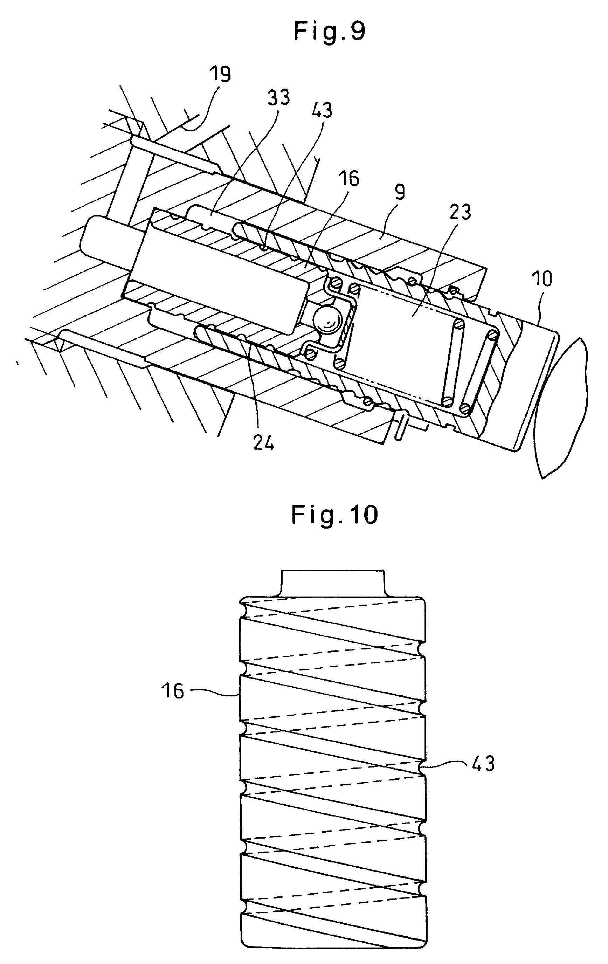

As shown in Figs. 9 and 10, a helical groove 43 may be formed in the portion of the outer periphery of the sleeve 16 that is brought into sliding contact with the plunger 10. With this arrangement, by changing the depth and/or lead angle of the helical groove 43, it is possible to adjust the damper force.

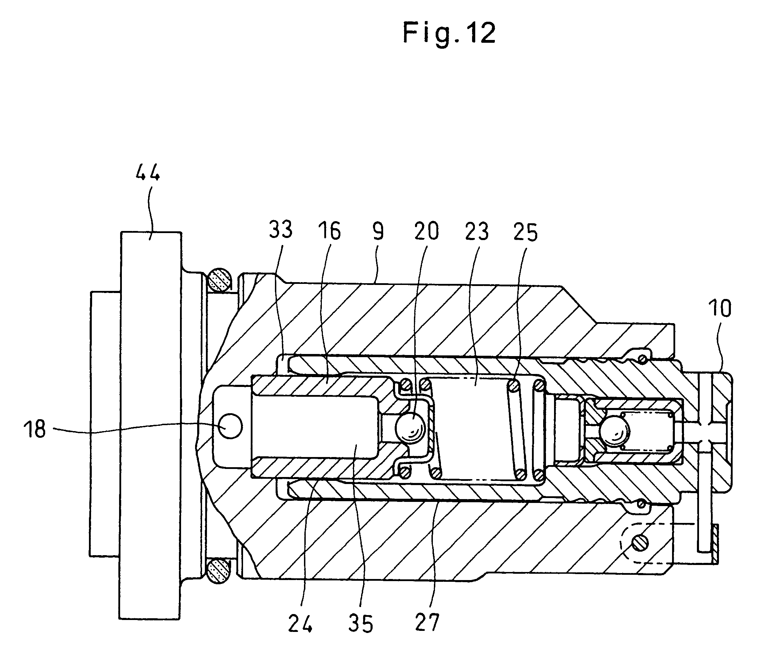

In the above embodiment, the chain tensioner 1 is mounted in position by bringing the external thread 13 on the outer periphery of the cylinder 9 into threaded engagement with the internal thread 14 on the inner periphery of the tensioner mounting hole 12. But the concept of the present invention is also applicable to the arrangement of Fig. 12, in which a flange 44 formed on the outer periphery of the cylinder 9 is fixed to the outer surface of the engine cover by a plurality of bolts (not shown).

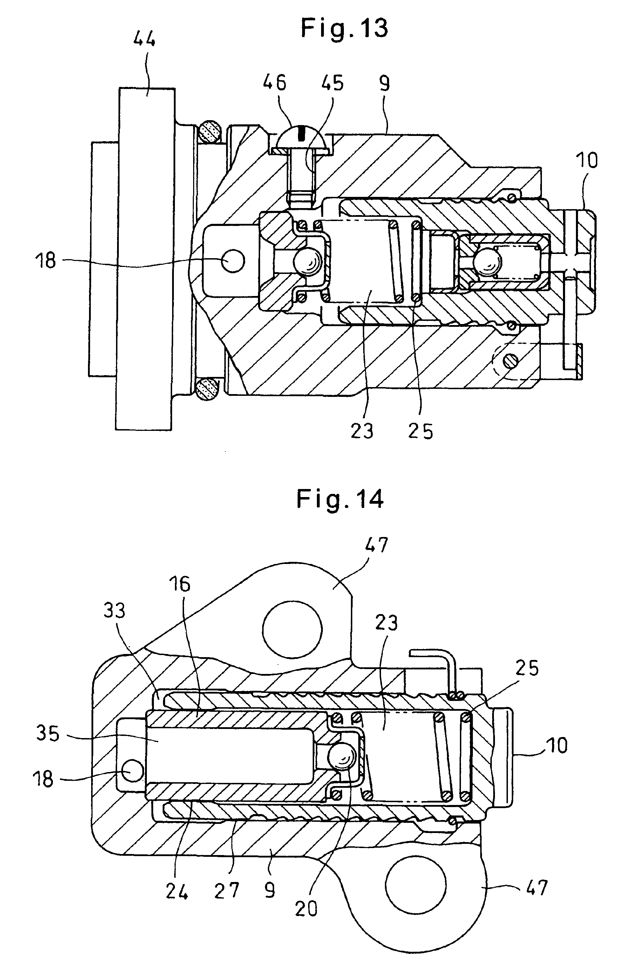

Fig. 13 shows a conventional chain tensioner in which a screw 46 is threaded into a threaded hole 45 extending from the inner periphery to outer periphery of the cylinder 9 so that air in the pressure chamber 23 can be discharged through a helical air vent passage defined between thread faces of the screw 46 and the threaded hole 45. This conventional tensioner needs the threaded hole 45 and the screw 46, so that it is costly. Also, the air vent passage defined between the thread faces of the screw 46 and the threaded hole 45 is so small that it tends to become clogged. Especially if this conventional tensioner is used in a diesel engine, foreign matter such as soot and other contaminants tends to get mixed into hydraulic oil supplied into the pressure chamber 23 through the oil supply passage 18, so that the air vent passage is more likely to become clogged. If the air vent passage becomes clogged, it becomes impossible to discharge air in the pressure chamber 23, which reduces the damper force of the chain tensioner.

In contrast, since the chain tensioner shown in Fig. 12 needs neither the threaded hole 45 nor the screw 46 for venting air, it is less costly. Also, since air is discharged through the leakage gap 24, which is less likely to become clogged, this tensioner can stably produce damper force over a long period of time.

The concept of the present invention is also applicable to the arrangement of Fig. 14, in which mounting pieces 47 formed on upper and lower portions of the cylinder 9 are fixed to a side of an engine block (not shown).

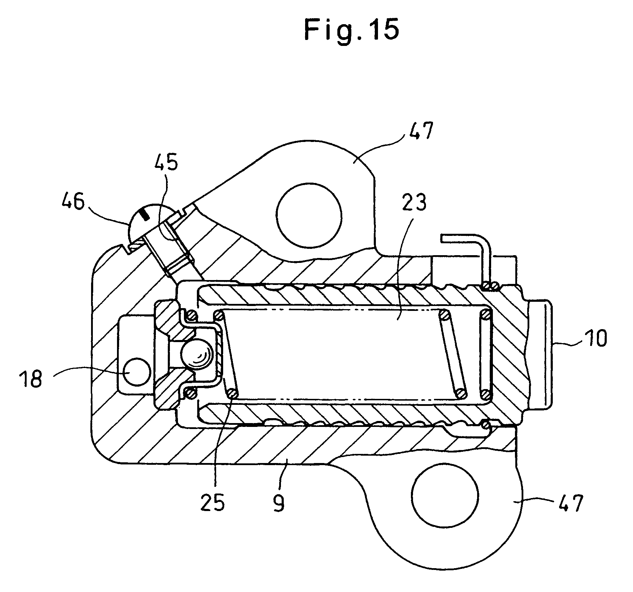

This chain tensioner is also less expensive compared to a conventional chain tensioner shown in Fig. 15, because this tensioner needs neither the threaded hole 45 nor the screw 46 for venting air. Also, since air is discharged through the leakage gap 24, which is less likely to become clogged, this tensioner can stably produce damper force over a long period of time.

## Claims

1. A chain tensioner comprising a cylindrical cylinder (9) having an open end and a closed end, a plunger (10) axially slidably inserted in the cylinder (9), a return spring (25) biasing the plunger (10) in a direction to protrude from the cylinder (9), wherein the plunger (9) is a cylindrical member having a bottom and an open end located in the cylinder (9), a sleeve (16) having two open ends and coaxially mounted in the cylinder (9), wherein the plunger (10) is axially slidably fitted around the outer periphery of the sleeve (16), wherein an oil supply passage (18) is formed in the cylinder (9) through which hydraulic oil is introduced from outside the cylinder (9) into the cylinder (9), wherein the end of the sleeve (16) near the closed end of the cylinder (9) is connected to an oil outlet of the oil supply passage (18), and a check valve (20) provided at the end of the sleeve (16) near the open end of the cylinder (9) that allows only a flow of hydraulic oil from inside the sleeve (16) to outside the sleeve (16), wherein a pressure chamber (23) is defined in the plunger (10) into which hydraulic oil flows through the check valve (20), and wherein a leakage gap (24) is defined between sliding surfaces of the plunger (10) and the sleeve (16),
**characterized in that**
an end portion of the sleeve (16) near the closed end of the cylinder (9) is press-fitted in a sleeve engaging recess (17) formed in the closed end of the cylinder (9).

2. The chain tensioner of claim 1 wherein an external thread (13) is formed on the outer periphery of the cylinder (9) that is threadedly engaged with an internal thread (14) formed on the inner periphery of a tensioner mounting hole (12) of an engine cover (11).

3. The chain tensioner of claim 1 or 2 wherein the return spring (25) has one end thereof supported by the sleeve (16), and the sleeve (16) is pressed against the closed end of the cylinder (9) under the biasing force of the return spring (25).

4. The chain tensioner of any of claims 1 to 3 wherein a reservoir chamber (35) is formed in the sleeve (16) having a larger diameter than a valve hole (34) of the check valve (20).

5. The chain tensioner of any of claims 1 to 4 wherein the outer periphery of the sleeve (16) comprises a large-diameter portion (36) defining the leakage gap (24) in cooperation with the plunger (10), and a small-diameter portion (38) connected to an end of the large-diameter portion (36) near the closed end of the cylinder (9) through a shoulder (37).

6. he chain tensioner of any of claims 1 to 4 wherein the inner periphery of the plunger (10) comprises a small-diameter portion (39) defining the leakage gap (24) in cooperation with the sleeve (16), and a large-diameter portion (41) connected to an end of the small-diameter portion (39) near the open end of the cylinder (9) through a shoulder (40).

7. The chain tensioner of any of claims 1 to 6 wherein a gap (27) is defined between sliding surfaces of the plunger (10) and the cylinder (9) which is larger in size than said leakage gap (24).

8. The chain tensioner of any of claims 1 to 7 wherein the sleeve (16) is made of a material having the same linear expansion coefficient as the material forming the plunger (10).

9. The chain tensioner of any of claims 1 to 8 wherein the cylinder (9) is made of a material having a larger linear expansion coefficient than the material forming the plunger (10).

10. The chain tensioner of any of claims 1 to 9 wherein a portion of the outer periphery of the sleeve (16) that is brought into sliding contact with the plunger (10) has a surface roughness Ra of 0.8 or less.

11. The chain tensioner of any of claims 1 to 10 wherein a helical groove (43) is formed in a portion of the outer periphery of the sleeve (16) that is brought into sliding contact with the plunger (10).

12. The chain tensioner of any of claims 1 to 11 further comprising an assist spring mounted between the closed end of the cylinder (9) and the end of the plunger (10) located in the cylinder (9) to assist the return spring (25).

13. The chain tensioner of any of claims 1 to 12 further comprising a register ring (29) received in a ring receiving groove (28) formed in the inner periphery of the cylinder (9) near the open end thereof and elastically bound around the outer periphery of the plunger (10), wherein a plurality of circumferential grooves (30) are formed in the outer periphery of the plunger (10) so as to be axially spaced from each other, wherein said register ring (29) is engageable in any of the circumferential grooves (30), and wherein each of said circumferential grooves (30) comprises a tapered surface (31) along which the register ring (29) can slide while radially expanding when a load is applied that tends to protrude the plunger (10) from the cylinder (9), thereby allowing the plunger (10) to protrude from the cylinder (9), and a stopper surface (32) that engages the register ring (29) when a load is applied that tends to push the plunger (10) into the cylinder (9), thereby restricting retraction of the plunger (10) into the cylinder (9).

## Patentansprüche

1. Kettenspanner, aufweisend einen zylindrischen Zylinder (9) mit einem offenem Ende und einem geschlossenen Ende, einem Kolben (10), axial gleitbar in den Zylinder (9) eingesetzt, einer Rückholfeder (25), die den Kolben (10) in einer Richtung vorspannt, um von dem Zylinder (9) vorzuspringen, wobei der Kolben (9) ein zylindrisches Teil ist, das einen Boden und ein offenes Ende hat, angeordnet in dem Zylinder (9), eine Hülse (16) mit zwei offenen Enden und koaxial in dem Zylinder (9) montiert, wobei der Kolben (10) axial gleitbar um den Außenumfang der Hülse (16) eingesetzt ist, wobei ein Ölzuführungskanal (18) in dem Zylinder (9) gebildet ist, durch den Hydrauliköl von außerhalb des Zylinders (9) in den Zylinder (9) eingeleitet wird, wobei das Ende der Hülse (16) nahe des geschlossenen Endes des Zylinders (9) verbunden ist mit einem Ölauslass des Ölzuführungskanals (18) und einem Rückschlagsventil (20), vorgesehen an dem Ende der Hülse (16) nahe des offenen Endes des Zylinders (9), das nur eine Strömung von Hydrauliköl von innerhalb der Hülse (16) nach außerhalb der Hülse (16) gestattet, wobei eine Druckkammer (23) in dem Kolben (10) gebildet ist, in die Hydrauliköl durch das Rückschlagsventil (20) fließt, und wobei ein Leckage-Spalt (24) zwischen den Gleitoberflächen des Kolbens (10) und der Hülse (16) gebildet ist,
**dadurch gekennzeichnet, dass**
ein Endabschnitt der Hülse (16) nahe des geschlossenen Endes des Zylinders (9) in eine Hülseneingriffsaussparung (17), gebildet in dem geschlossenen Ende des Zylinders (9), presseingesetzt ist.

2. Kettenspanner nach Anspruch 1, wobei ein Außengewinde (13) an dem Außenumfang des Zylinders (9) gebildet ist, das in Gewindeeingriff ist mit einem Innengewinde (14), gebildet an dem Innenumfang einer Kettenspannermontagebohrung (12) eine Motorabdeckung (11).

3. Kettenspanner nach Anspruch 1 oder 2, wobei die Rückholfeder (25) ein Ende derselben hat, abgestützt durch die Hülse (16), und die Hülse (16) gegen das geschlossene Ende des Zylinders (9) unter der Vorspannkraft der Rückholfeder (25) presst ist.

4. Kettenspanner nach einem der Ansprüche 1 bis 3, wobei eine Reservoirkammer (35) in der Hülse (16) gebildet ist, die einen größeren Durchmesser als eine Ventilbohrung (34) des Rückschlagsventils (20) hat.

5. Kettenspanner nach einem der Ansprüche 1 bis 4, wobei der Außenumfang der Hülse (16) aufweist einen Abschnitt (36) mit großem Durchmesser, der den Leckage- Spalt (24) im Zusammenwirken mit dem Kolben (10) bildet, und einen Abschnitt (38) mit kleinem Durchmesser, verbunden mit einem Ende des Abschnittes (36) mit großem Durchmesser nahe des geschlossenen Endes des Zylinders (9) durch eine Schulter (37).

6. Kettenspanner nach einem der Ansprüche 1 bis 4, wobei der Innenumfang des Kolbens (10) aufweist einen Abschnitt (39) mit kleinem Durchmesser, der den Leckage- Spalt (24) im Zusammenwirken mit der Hülse (16) bildet, und einen Abschnitt (41) mit großem Durchmesser, verbunden mit einem Ende des Abschnittes (39) mit kleinem Durchmesser nahe des offenen Endes des Zylinders (9) durch eine Schulter (40).

7. Kettenspanner nach einem der Ansprüche 1 bis 6, wobei ein Spalt (27) zwischen den Gleitoberflächen des Kolbens (10) und des Zylinders (9) gebildet ist, der in der Abmessung größer als der Leckage- Spalt (24) ist.

8. Kettenspanner nach einem der Ansprüche 1 bis 7, wobei die Hülse (16) aus einem Material gefertigt ist, das denselben linearen Ausdehnungskoeffizienten wie das Material hat, das den Kolben (10) bildet.

9. Kettenspanner nach einem der Ansprüche 1 bis 8, wobei der Zylinder (9) aus einem Material gefertigt ist, das einen größeren linearen Ausdehnungskoeffizienten wie das Material hat, das den Kolben (10) bildet.

10. Kettenspanner nach einem der Ansprüche 1 bis 9, wobei ein Abschnitt des Au-βenumfanges der Hülse (16), der in Gleitkontakt mit dem Kolben (10) gebracht ist, eine Oberflächenrauhigkeit Ra von 0,8 oder weniger hat.

11. Kettenspanner nach einem der Ansprüche 1 bis 10, wobei eine schneckenförmige Nut (43) in einem Abschnitt des Außenumfanges der Hülse (16) gebildet ist, der in Gleitkontakt mit dem Kolben (10) gebracht ist.

12. Kettenspanner nach einem der Ansprüche 1 bis 11, außerdem aufweisend eine Hilfsfeder, montiert zwischen dem geschlossenen Ende des Zylinders (9) und dem Ende des Kolbens (10), angeordnet in dem Zylinder (9), um die Rückholfeder (25) zu unterstützen.

13. Kettenspanner nach einem der Ansprüche 1 bis 12, außerdem aufweisend einen Passring (29), aufgenommen in einer Ringaufnahmenut (28), gebildet in dem Innenumfang des Zylinders (9) nahe des offenen Endes desselben und elastisch um den Außenumfang des Kolbens (10) festgehalten, wobei eine Mehrzahl von Umfangsnuten (30) in dem Außenumfang des Kolbens (10) gebildet ist, um axial voneinander beabstandet zu sein, wobei der Passring (29) in eine der Umfangsnuten (30) eingreifbar ist und wobei jede der Umfangsnuten (30) eine geneigte Oberfläche (31) aufweist, entlang der der Passring (29) gleiten kann, während er sich radial ausdehnt, wenn eine Last aufgebracht wird, die tendiert den Kolben (10) von dem Zylinder (9) vorzuspringen, um dadurch dem Kolben (10) zu gestatten, von dem Zylinder (9) vorzuspringen, und eine Anschlagsoberfläche (32), die den Passring (29) eingreift, wenn eine Last aufgebracht wird, die tendiert, den Kolben (10) in den Zylinder (9) zu drücken, um dadurch das Zurückziehen des Kolbens (10)in den Zylinder (9) zu begrenzen.

## Revendications

1. Tendeur de chaîne comprenant un cylindre cylindrique (9) ayant une extrémité ouverte et une extrémité fermée, un plongeur (10) inséré axialement d'une manière coulissante dans le cylindre (9), un ressort de rappel (25) sollicitant le plongeur (10) dans une direction pour qu'il dépasse du cylindre (9), où le plongeur (9) est un élément cylindrique ayant un fond et une extrémité ouverte située dans le cylindre (9), un manchon (16) ayant deux extrémités ouvertes et installé coaxialement dans le cylindre (9), où le plongeur (10) est ajusté d'une manière axialement coulissante autour de la périphérie extérieure du manchon (16), où un passage d'amenée d'huile (18) est formé dans le cylindre (9) à travers lequel l'huile hydraulique est introduite depuis l'extérieur du cylindre (9) dans le cylindre (9), où l'extrémité du manchon (16) près de l'extrémité fermée du cylindre (9) est connectée à une sortie d'huile du passage d'amenée d'huile (18), et une vanne de retenue (20) réalisée à l'extrémité du manchon (16) près de l'extrémité ouverte du cylindre (9) qui permet seulement un écoulement de l'huile hydraulique depuis l'intérieur du manchon (16) vers l'extérieur du manchon (16), où une chambre de pression (23) est définie dans le plongeur (10) dans laquelle l'huile hydraulique s'écoule à travers la vanne de retenue (20), et où un espace de fuite (24) est défini entre les surfaces de coulissement du plongeur (10) et du manchon (16),
**caractérisé en ce que**
une portion d'extrémité du manchon (16) près de l'extrémité fermée du cylindre (9) est ajustée d'une manière serrée dans un évidement d'engagement de manchon (17) formé dans l'extrémité fermée du cylindre (9).

2. Tendeur de chaîne selon la .revendication 1, où un filetage externe (13) est formé sur la périphérie extérieure du cylindre (9) qui est en prise de filetage avec un taraudage (14) formé sur la périphérie intérieure d'un trou de montage de tendeur (12) d'un couvercle de moteur (11).

3. Tendeur de chaîne selon la revendication 1 ou 2, où le ressort de rappel (25) a une extrémité supportée par le manchon (16), et le manchon (16) est pressé contre l'extrémité fermée du cylindre (9) sous la force de sollicitation du ressort de rappel (25).

4. Tendeur de chaîne selon l'une quelconque des revendications 1 à 3, où une chambre de réservoir (35) est formée dans le manchon (16) ayant un plus grand diamètre qu'un trou de vanne (34) de la vanne d'arrêt (20).

5. Tendeur de chaîne selon l'une quelconque des revendications 1 à 4, où la périphérie extérieure du manchon (16) comprend une portion d'un grand diamètre (36) définissant l'espace de fuite (24) en coopération avec le plongeur (10), et une portion de petit diamètre (38) connectée à une extrémité de la portion de grand diamètre (36) près de l'extrémité fermée du cylindre (9) par un épaulement (37).

6. Tendeur de chaîne selon l'une quelconque des revendications 1 à 4, où la périphérie intérieure du plongeur (10) comprend une portion d'un petit diamètre (39) définissant un espace de fuite (24) en coopération avec le manchon (16), et une portion d'un grand diamètre (41) connectée à une extrémité de la portion d'un petit diamètre (39) près de l'extrémité ouverte du cylindre (9) par un épaulement (40).

7. Tendeur de chaîne selon l'une quelconque des revendications 1 à 6, où un espace (27) est défini entre des surfaces de coulissement du plongeur (10) et du cylindre (9) qui a une taille plus grande que ledit espace de fuite (24).

8. Tendeur de chaîne selon l'une quelconque des revendications 1 à 7, où le manchon (16) est réalisé en un matériau ayant le même coefficient d'expansion linéaire que le matériau formant le plongeur (10).

9. Tendeur de chaîne selon l'une quelconque des revendications 1 à 8, où le cylindre (9) est réalisé en un matériau ayant un coefficient d'expansion linéaire plus grand que le matériau formant le plongeur (10).

10. Tendeur de chaîne selon l'une quelconque des revendications 1 à 9, où une portion de la périphérie extérieure du manchon (16) qui est amenée en contact de coulissement avec le plongeur (10) possède une rugosité de surface Ra de 0,8 ou moins.

11. Tendeur de chaîne selon l'une quelconque des revendications 1 à 10, où une rainure hélicoïdale (43) est formée dans une portion de la périphérie extérieure du manchon (16) qui est amenée en contact de coulissement avec le plongeur (10).

12. Tendeur de chaîne selon l'une quelconque des revendications 1 à 11, comprenant en outre un ressort d'assistance installé entre l'extrémité fermée du cylindre (9) et l'extrémité du plongeur (10) située dans le cylindre (9) pour assister le ressort de rappel (25).

13. Tendeur de chaîne selon l'une quelconque des revendications 1 à 12, comprenant en outre une bague d'indexage (29) reçue dans une rainure de réception de bague (28) ménagée dans la périphérie intérieure du cylindre (9) près de son extrémité ouverte et courbée élastiquement autour de la périphérie extérieure du plongeur (10), où la pluralité de rainures circonférentielles (30) sont formées dans la périphérie extérieure du plongeur (10) de manière à être espacées axialement les unes des autres, où ladite bague d'indexage (29) peut s'engager dans une quelconque des rainures circonférentielles (30), et où chacune desdites rainures circonférentielles (30) comprend une surface effilée (31) le long de laquelle la bague d'indexage (29) peut glisser tout en s'expansant radialement lorsqu'une charge est appliquée qui tend à amener le plongeur (10) en saillie du cylindre (9), en permettant ainsi au plongeur (10) de faire saillie du cylindre (9), et une surface d'arrêt (32) qui vient en prise avec la bague d'indexage (29) lorsqu'une charge est appliquée qui tend à pousser le plongeur (10) dans le cylindre (9), en restreignant ainsi la rétraction du plongeur (10) dans le cylindre (9).
